# EUROPÄISCHE PATENTANMELDUNG

(11) **EP 4 756 618 A1**
(43) Veröffentlichungstag der Anmeldung: **10.06.2026**
(21) Anmeldenummer: 24217557.8
(22) Anmeldetag: 04.12.2024
(51) Int. Cl.: G06F 9/54

(54) **VERFAHREN UND VORRICHTUNG ZUM VERARBEITEN VON MIT EINEM FAHRZEUG ASSOZIIERTEN INFORMATIONEN**

(71) Anmelder: Robert Bosch GmbH, 70442 Stuttgart (DE)
(72) Erfinder: Menold, Sven, 74348 Lauffen Am Neckar (DE)

(57) **Zusammenfassung**

Computerimplementiertes Verfahren zum Verarbeiten von mit einem Fahrzeug, beispielsweise Kraftfahrzeug, assoziierten Informationen, beispielsweise zur Verwaltung und/oder Unterstützung von unterschiedlichen Varianten von Komponenten des Fahrzeugs, aufweisend: Bereitstellen einer Abstraktionsschicht zwischen wenigstens einer Komponente des Fahrzeugs und einer Anwendungssoftware des Fahrzeugs, und, optional, Verarbeiten von mit der Komponente des Fahrzeugs assoziierten Daten mittels der Abstraktionsschicht.

## Beschreibung

### Stand der Technik, Technisches Gebiet

Die Offenbarung bezieht sich auf ein Verfahren zum Verarbeiten von mit einem Fahrzeug assoziierten Informationen.

Die Offenbarung bezieht sich auf eine Vorrichtung zum Verarbeiten von mit einem Fahrzeug assoziierten Informationen.

### Offenbarung der Erfindung

Manche Beispiele beziehen sich auf ein computerimplementiertes Verfahren zum Verarbeiten von mit einem Fahrzeug, beispielsweise Kraftfahrzeug, assoziierten Informationen, beispielsweise zur Verwaltung und/oder Unterstützung von unterschiedlichen Varianten von Komponenten des Fahrzeugs, aufweisend: Bereitstellen einer Abstraktionsschicht zwischen wenigstens einer Komponente des Fahrzeugs und einer Anwendungssoftware des Fahrzeugs, und, optional, Verarbeiten von mit der Komponente des Fahrzeugs assoziierten Daten mittels der Abstraktionsschicht. Bei manchen Beispielen ermöglicht dies einen Betrieb der Anwendungssoftware des Fahrzeugs, ohne dass Anpassungen an unterschiedliche Varianten erforderlich sind.

Bei manchen Beispielen ist vorgesehen, dass die Komponente wenigstens eines der folgenden Elemente ist oder aufweist: a) eine Hardwarekomponente, oder b) eine Softwarekomponente.

Bei manchen Beispielen ist vorgesehen, dass das Verfahren aufweist: Verarbeiten, beispielsweise wahlweises Verarbeiten, von mit unterschiedlichen Varianten von Komponenten des Fahrzeugs assoziierten Daten, beispielsweise ohne ein Anpassen, beispielsweise Ändern, der Anwendungssoftware.

Bei manchen Beispielen ist vorgesehen, dass das Verfahren aufweist: Bereitstellen einer ersten Schnittstelle, beispielsweise zu einer weiteren Schicht, beispielsweise Verbundschicht, wobei die erste Schnittstelle unabhängig ist von wenigstens einem der folgenden Elemente: a) Fahrzeug, oder b) Komponente des Fahrzeugs, beispielsweise Hardwarekomponente, und, optional, Senden von Informationen bezüglich des Fahrzeugs und/oder der Komponente des Fahrzeugs, beispielsweise der Hardwarekomponente, über die erste Schnittstelle, beispielsweise an wenigstens eines der folgenden Elemente: a) Anwendungssoftware, oder b) weitere Schicht.

Bei manchen Beispielen ist vorgesehen, dass das Verfahren aufweist: Empfangen von variantenspezifischen Informationen bezüglich der Komponente des Fahrzeugs, beispielsweise von einem variantenspezifischen, beispielsweise hardwarespezifischen, Dienst, Senden von mit wenigstens einer Variante der variantenspezifischen Informationen assoziierten Information, beispielsweise basierend auf den variantenspezifischen Informationen, beispielsweise zur Behandlung der wenigstens einen Variante, an wenigstens eines der folgenden Elemente: a) Anwendungssoftware, oder b) weitere Schicht.

Bei manchen Beispielen ist vorgesehen, dass das Verfahren aufweist: Verarbeiten, beispielsweise Verwenden, wenigstens einer computerimplementierten Datenstruktur, die wenigstens einen Aspekt der unterschiedlichen Varianten der Komponenten charakterisiert.

Bei manchen Beispielen ist vorgesehen, dass die Datenstruktur wenigstens eines der folgenden Elemente aufweist: a) ein erstes Informationselement, das eine Variante charakterisiert, oder b) ein zweites Informationselement, das eine, beispielsweise eindeutige, Identifikation, der Variante charakterisiert, oder c) ein drittes Informationselement, das eine Anzahl von mit der Variante assoziierten Merkmalen charakterisiert, oder d) ein viertes Informationselement, das eine Liste von mit der Variante assoziierten Merkmalen charakterisiert, oder e) ein fünftes Informationselement, das eine Anzahl von Instanzen eines mit der Datenstruktur assoziierten Objekts charakterisiert, oder f) ein sechstes Informationselement, das Instanzen eines bzw. des mit der Datenstruktur assoziierten Objekts charakterisiert, oder g) ein siebtes Informationselement, das Eigenschaften von Instanzen wenigstens eines mit der Datenstruktur assoziierten Objekts charakterisiert, oder h) ein achtes Informationselement, das eine Identifikation einer Instanz charakterisiert, oder i) ein neuntes Informationselement, das eine Verfügbarkeit eines Merkmals für eine Instanz charakterisiert.

Bei manchen Beispielen ist vorgesehen, dass das Verfahren wenigstens eines der folgenden Elemente aufweist: a) Bereitstellen eines Basisdiensts zur Verarbeitung von mit der Abstraktionsschicht assoziierten Informationen, oder b) Bereitstellen eines weiteren Diensts, beispielsweise für einen Datenaustausch zwischen dem Basisdienst und der Anwendungssoftware.

Manche Beispiele beziehen sich auf eine Vorrichtung zum Verarbeiten von mit einem Fahrzeug, beispielsweise Kraftfahrzeug, assoziierten Informationen, beispielsweise zur Verwaltung und/oder Unterstützung von unterschiedlichen Varianten von Komponenten des Fahrzeugs, wobei die Vorrichtung dazu ausgebildet ist, das Verfahren gemäß der Offenbarung auszuführen.

Manche Beispiele beziehen sich auf ein Fahrzeug aufweisend wenigstens eine Vorrichtung gemäß der Offenbarung.

Manche Beispiele beziehen sich auf eine computerlesbares Speichermedium, umfassend Befehle, die bei der Ausführung durch einen Computer diesen veranlassen, das Verfahren gemäß der Offenbarung auszuführen.

Manche Beispiele beziehen sich auf ein Computerprogramm, umfassend Befehle, die bei der Ausführung des Programms durch einen Computer diesen veranlassen, das Verfahren gemäß der Offenbarung auszuführen.

Manche Beispiele beziehen sich auf ein Datenträgersignal, das das Computerprogramm gemäß der Offenbarung überträgt und/oder charakterisiert.

Manche Beispiele beziehen sich auf eine Verwendung des Verfahrens gemäß der Offenbarung und/oder der Vorrichtung gemäß der Offenbarung und/oder des Fahrzeugs gemäß der Offenbarung und/oder des computerlesbaren Speichermediums gemäß der Offenbarung und/oder des Computerprogramms gemäß der Offenbarung und/oder des Datenträgersignals gemäß der Offenbarung für wenigstens eines der folgenden Elemente: a) Abstrahieren von Komponenten, beispielsweise Hardwarekomponenten, des Fahrzeugs, beispielsweise so, dass die Anwendungssoftware nicht an unterschiedliche Varianten der Komponenten angepasst werden muss, oder b) Bereitstellen einer wenigstens die Abstraktionsschicht, beispielsweise mehrere Schichten, und/oder Dienste aufweisenden Architektur, oder c) Bereitstellen einer Programmierschnittstelle, beispielsweise Application Programming Interface, API, beispielsweise zur Abstraktion von unterschiedlichen Varianten von Komponenten des Fahrzeugs, oder d) Steigern einer Flexibilität bezüglich einer Verarbeitung von variantenspezifischen Informationen für das Fahrzeug, oder e) Vermeiden einer festen Codierung von variantenspezifischen Aspekten einer Software für das Fahrzeug.

Weitere Merkmale, Anwendungsmöglichkeiten und Vorteile ergeben sich aus der nachfolgenden Beschreibung von Beispielen, die in den Figuren der Zeichnung dargestellt sind. Dabei bilden alle beschriebenen oder dargestellten Merkmale für sich oder in beliebiger Kombination den Gegenstand der Offenbarung, unabhängig von ihrer Zusammenfassung in den Ansprüchen oder deren Rückbeziehung sowie unabhängig von ihrer Formulierung bzw. Darstellung in der Beschreibung bzw. in der Zeichnung.

### Kurze Beschreibung der Zeichnung

In der Zeichnung zeigt:
- Fig. 1: schematisch ein Flussdiagramm,
- Fig. 2: schematisch ein Blockdiagramm,
- Fig. 3: schematisch ein Flussdiagramm,
- Fig. 4: schematisch ein Flussdiagramm,
- Fig. 5: schematisch ein Flussdiagramm,
- Fig. 6: schematisch ein Blockdiagramm,
- Fig. 7: schematisch ein Flussdiagramm,
- Fig. 8: schematisch ein Blockdiagramm,
- Fig. 9: schematisch ein Blockdiagramm,
- Fig. 10: schematisch ein Diagramm,
- Fig. 11: schematisch ein Blockdiagramm,
- Fig. 12: schematisch ein Blockdiagramm,

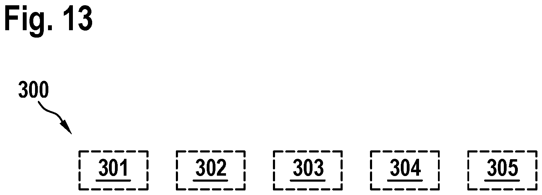

- Fig. 13: schematisch Beispiele von Verwendungen.

### Beschreibung von manchen Beispielen

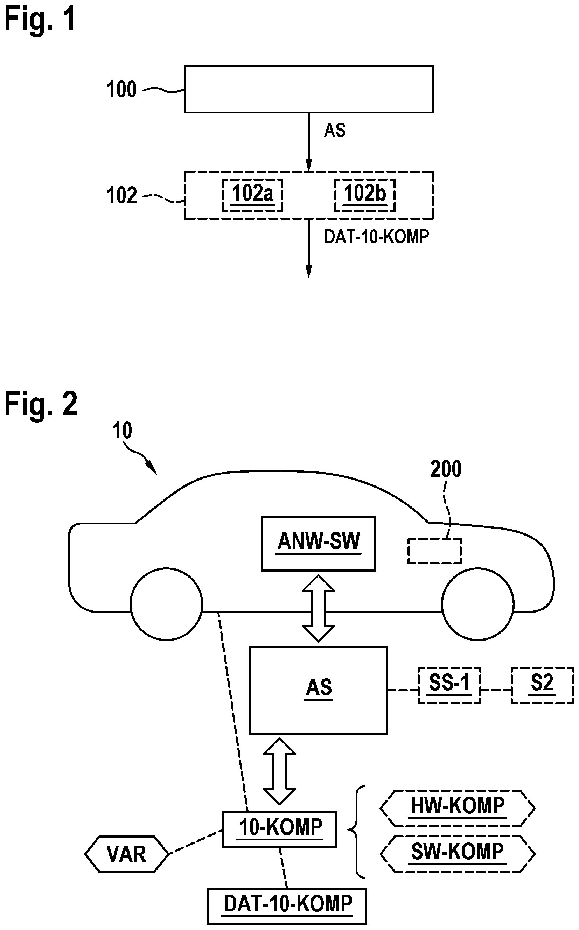

Manche Beispiele, s. z.B. Fig. 1, 2, beziehen sich auf ein computerimplementiertes Verfahren zum Verarbeiten von mit einem Fahrzeug 10, beispielsweise Kraftfahrzeug, assoziierten Informationen, beispielsweise zur Verwaltung und/oder Unterstützung von unterschiedlichen Varianten VAR von Komponenten 10-KOMP des Fahrzeugs 10, aufweisend: Bereitstellen 100 einer Abstraktionsschicht AS zwischen wenigstens einer Komponente 10-KOMP des Fahrzeugs 10 und einer Anwendungssoftware ANW-SW des Fahrzeugs 10, und, optional, Verarbeiten 102 von mit der Komponente 10-KOMP des Fahrzeugs 10 assoziierten Daten DAT-10-KOMP mittels der Abstraktionsschicht AS. Bei manchen Beispielen ermöglicht dies einen Betrieb der Anwendungssoftware ANW-SW des Fahrzeugs 10, ohne dass Anpassungen z.B. der Anwendungssoftware ANW-SW an unterschiedliche Varianten VAR erforderlich sind.

Bei manchen Beispielen, Fig. 2, ist vorgesehen, dass die Komponente 10-KOMP wenigstens eines der folgenden Elemente ist oder aufweist: a) eine Hardwarekomponente HW-KOMP, oder b) eine Softwarekomponente SW-KOMP.

Bei manchen Beispielen, Fig. 1, ist vorgesehen, dass das Verfahren aufweist: Verarbeiten 102a, beispielsweise wahlweises Verarbeiten 102b, von mit unterschiedlichen Varianten VAR von Komponenten 10-KOMP des Fahrzeugs 10 assoziierten Daten, beispielsweise ohne ein Anpassen, beispielsweise Ändern, der Anwendungssoftware ANW-SW.

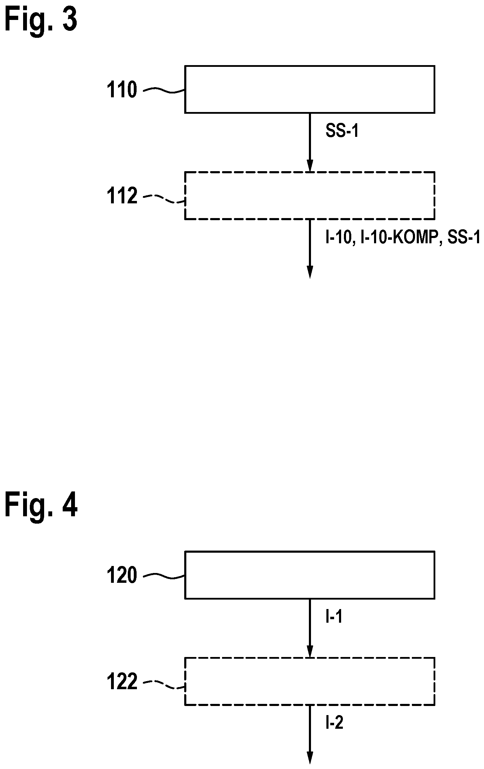

Bei manchen Beispielen, Fig. 3, ist vorgesehen, dass das Verfahren aufweist: Bereitstellen 110 einer ersten Schnittstelle SS-1, beispielsweise zu einer weiteren Schicht S2 (Fig. 2), beispielsweise Verbundschicht, wobei die erste Schnittstelle SS-1 unabhängig ist von wenigstens einem der folgenden Elemente: a) Fahrzeug 10, oder b) Komponente 10-KOMP des Fahrzeugs 10, beispielsweise Hardwarekomponente HW-KOMP, und, optional, Senden 112 von Informationen 1-10, I-10-KOMP bezüglich des Fahrzeugs 10 und/oder der Komponente 10-KOMP des Fahrzeugs 10, beispielsweise der Hardwarekomponente HW-KOMP, über die erste Schnittstelle SS-1, beispielsweise an wenigstens eines der folgenden Elemente: a) Anwendungssoftware ANW-SW, oder b) weitere Schicht S2.

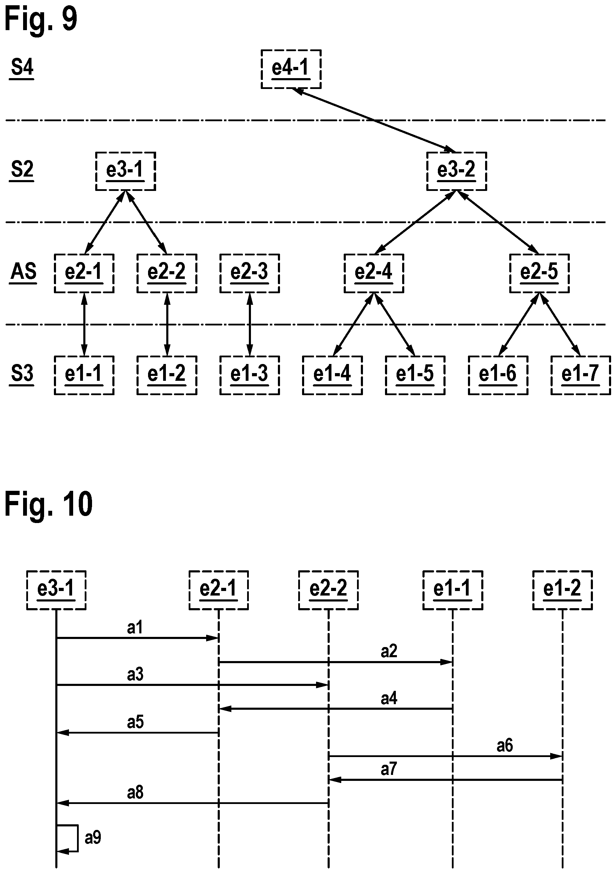

Bei manchen Beispielen charakterisiert die Abstraktionsschicht AS beispielsweise eine Basisschicht, z.B. basic layer, einer Schichtarchitektur, und die weitere Schicht S2 charakterisiert beispielsweise eine Verbundschicht, z.B. composite layer, der Schichtarchitektur. Details zu möglichen Architekturen, die die Schichten AS, S2 aufweisen, sind weiter unten z.B. unter Bezugnahme auf Fig. 9 beschrieben.

Bei manchen Beispielen, Fig. 4, ist vorgesehen, dass das Verfahren aufweist: Empfangen 120 von variantenspezifischen Informationen I1 bezüglich der Komponente 10-KOMP (Fig. 2) des Fahrzeugs 10, beispielsweise von einem variantenspezifischen, beispielsweise hardwarespezifischen, Dienst, optional Senden 122 von mit wenigstens einer Variante VAR der variantenspezifischen Informationen I1 assoziierten Information I2, beispielsweise basierend auf den variantenspezifischen Informationen 11, beispielsweise zur Behandlung, der wenigstens einen Variante VAR, an wenigstens eines der folgenden Elemente: a) Anwendungssoftware ANW-SW, oder b) weitere Schicht S2. Dadurch ist bei manchen Beispielen ein effizienter Informationsaustausch zwischen variantenspezifischen Komponenten, z.B. Diensten, und der Anwendungssoftware ANW-SW ermöglicht.

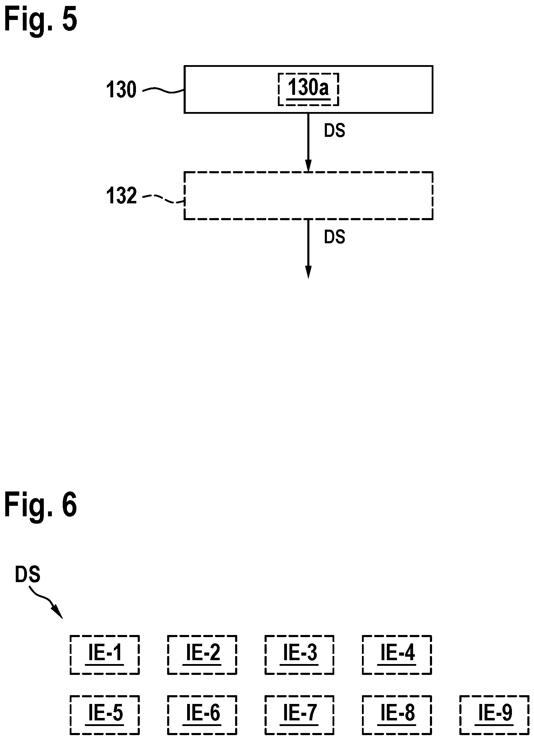

Bei manchen Beispielen, Fig. 5, ist vorgesehen, dass das Verfahren aufweist: Verarbeiten 130, beispielsweise Verwenden 130a, wenigstens einer computerimplementierten Datenstruktur DS, die wenigstens einen Aspekt der unterschiedlichen Varianten VAR (Fig. 2) der Komponenten 10-KOMP charakterisiert. Der optionale Block 132 gemäß Fig. 5 symbolisiert ein optionales Senden oder Austauschen (Senden und/oder Empfangen) von Informationen mittels der Datenstruktur DS.

Bei manchen Beispielen, Fig. 6, ist vorgesehen, dass die Datenstruktur DS wenigstens eines der folgenden Elemente aufweist: a) ein erstes Informationselement IE-1, das eine Variante VAR charakterisiert, oder b) ein zweites Informationselement IE-2, das eine, beispielsweise eindeutige, Identifikation, der Variante VAR charakterisiert, oder c) ein drittes Informationselement IE-3, das eine Anzahl von mit der Variante VAR assoziierten Merkmalen charakterisiert, oder d) ein viertes Informationselement IE-4, das eine Liste von mit der Variante assoziierten Merkmalen charakterisiert, oder e) ein fünftes Informationselement IE-5, das eine Anzahl von Instanzen eines mit der Datenstruktur DS assoziierten Objekts charakterisiert, oder f) ein sechstes Informationselement IE-6, das Instanzen eines bzw. des mit der Datenstruktur DS assoziierten Objekts charakterisiert, oder g) ein siebtes Informationselement IE-7, das Eigenschaften von Instanzen wenigstens eines mit der Datenstruktur DS assoziierten Objekts charakterisiert, oder h) ein achtes Informationselement IE-8, das eine Identifikation einer Instanz charakterisiert, oder i) ein neuntes Informationselement IE-9, das eine Verfügbarkeit eines Merkmals für eine Instanz charakterisiert.

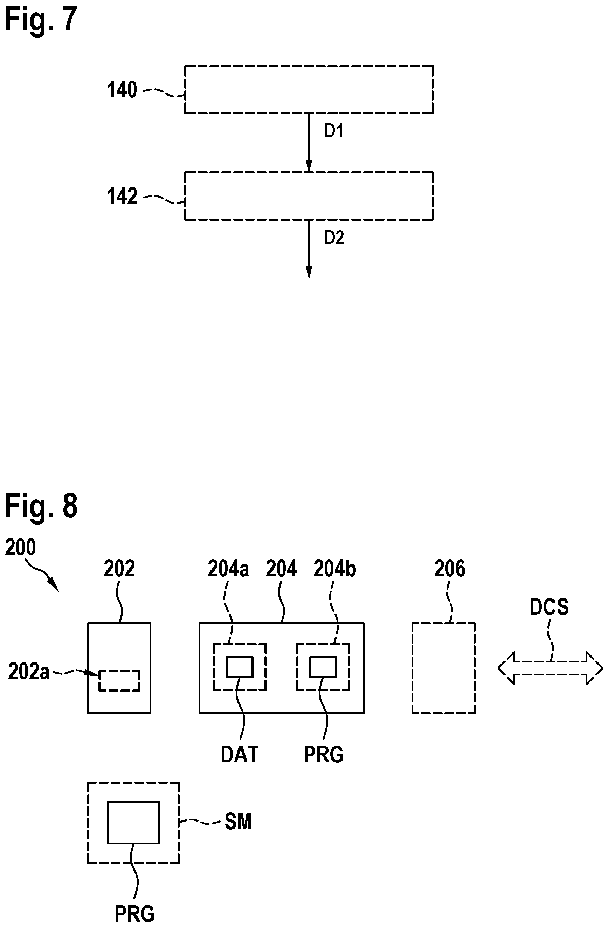

Bei manchen Beispielen, Fig. 7, ist vorgesehen, dass das Verfahren wenigstens eines der folgenden Elemente aufweist: a) Bereitstellen 140 eines Basisdiensts D1 zur Verarbeitung von mit der Abstraktionsschicht AS assoziierten Informationen, oder b) Bereitstellen 142 eines weiteren Diensts D2, beispielsweise für einen Datenaustausch zwischen dem Basisdienst D1 und der Anwendungssoftware ANW-SW. Damit ist bei manchen Beispielen eine dienstorientierte Architektur zur Verarbeitung von Varianteninformationen ermöglicht, die z.B. wenigstens eine der genannten Schichten AS, S2 verwenden kann.

Manche Beispiele, Fig. 8, beziehen sich auf eine Vorrichtung 200 zum Verarbeiten von mit einem Fahrzeug 10, beispielsweise Kraftfahrzeug, assoziierten Informationen, beispielsweise zur Verwaltung und/oder Unterstützung von unterschiedlichen Varianten VAR von Komponenten 10-KOMP des Fahrzeugs 10, wobei die Vorrichtung 200 dazu ausgebildet ist, das Verfahren gemäß der Offenbarung auszuführen.

Bei manchen Beispielen, Fig. 8, ist vorgesehen, dass die Vorrichtung 200 aufweist: eine wenigstens einen Rechenkern 202a aufweisende Recheneinrichtung ("Computer") 202, eine der Recheneinrichtung 202 zugeordnete Speichereinrichtung 204 zur zumindest zeitweisen Speicherung wenigstens eines der folgenden Elemente: a) Daten DAT (z.B. mit der Abstraktionsschicht AS und/oder der weiteren Schicht S2 assoziierte Daten), b) Computerprogramm PRG, beispielsweise zur Ausführung des Verfahrens gemäß der Offenbarung.

Bei weiteren Beispielen, Fig. 8, weist die Speichereinrichtung 204 einen flüchtigen Speicher (z.B. Arbeitsspeicher (RAM)) 204a auf, und/oder einen nichtflüchtigen (NVM-) Speicher (z.B. Flash-EEPROM) 204b, oder eine Kombination hieraus oder mit anderen, nicht explizit genannten Speichertypen.

Weitere Beispiele, Fig. 8, beziehen sich auf ein computerlesbares Speichermedium SM, umfassend Befehle PRG, die bei der Ausführung durch einen Computer 202 diesen veranlassen, das Verfahren gemäß der Offenbarung auszuführen.

Weitere Beispiele, Fig. 8, beziehen sich auf ein Computerprogramm PRG, umfassend Befehle, die bei der Ausführung des Programms PRG durch einen Computer 202 diesen veranlassen, das Verfahren gemäß der Offenbarung auszuführen.

Weitere Beispiele, Fig. 8, beziehen sich auf ein Datenträgersignal DCS, das das Computerprogramm PRG gemäß der Offenbarung charakterisiert und/oder überträgt. Das Datenträgersignal DCS ist beispielsweise über eine optionale Datenschnittstelle 206 der Vorrichtung 200 übertragbar (z.B. sendbar und/oder empfangbar).

Manche Beispiele, Fig. 2, beziehen sich auf ein Fahrzeug 10 aufweisend wenigstens eine Vorrichtung 200 gemäß der Offenbarung. Beispielsweise kann die Vorrichtung 200 ein Steuergerät oder Fahrzeugcomputer für das Fahrzeug 10 sein.

Nachfolgend sind weitere Aspekte und Beispiele beschrieben, die - bei weiteren Beispielen - jeweils einzeln für sich oder in beliebiger Kombination miteinander mit wenigstens einem der vorstehend beschriebenen Aspekte und/oder Beispiele kombinierbar sind.

Fig. 9 zeigt schematisch unterschiedliche Schichten AS, S2, S3, S4 einer Schicht- und/oder Dienst-basierten Architektur wie sie bei manchen Beispielen basierend auf dem Prinzip gemäß der Offenbarung realisierbar ist.

Schicht S3 symbolisiert eine variantenspezifische Schicht, die beispielsweise variantenspezifische, beispielsweise atomare, Dienste e1-1, e1-2, ..., e1-7 aufweisen kann, die z.B. spezifisch für bestimmte Komponenten 10-KOMP bzw. Varianten VAR von Komponenten vorgesehen sein können, und die z.B. mit ein oder mehreren Diensten, beispielsweise Basisdiensten, e2-1, e2-2, e2-3, e2-4, e2-5 der Abstraktionsschicht AS Daten austauschen können. Dadurch können die Basisdienste z.B. Informationen über in eine Konfiguration eines Fahrzeugs 10 vorhandene Varianten erlangen.

In der weiteren Schicht S2 können ebenfalls ein oder mehrere Dienste, beispielsweise Verbunddienste, e3-1, e3-2 vorgesehen sein, die z.B. variantenunabhängig Daten mit den Diensten e2-1, e2-2, e2-3, e2-4, e2-5 der Abstraktionsschicht AS austauschen können. Ebenfalls können die Dienste e3-1, e3-2 Daten mit einer Anwendungsschicht S4, beispielsweise wenigstens einem Dienst e4-1 der Anwendungsschicht S4, austauschen, beispielsweise ebenfalls variantenunabhängig, da die Abstraktionsschicht AS bereits eine gewünschte Abstraktion von spezifischen Varianten z.B. von Hardwarekomponenten HW-KOMP (Fig. 2) ermöglicht. Bei manchen Beispielen repräsentiert der Dienst e4-1 der Anwendungsschicht S4 beispielsweise die vorstehend beschriebene Anwendungssoftware ANW-SW (Fig. 2) oder zumindest einen Teil hiervon.

Fig. 10 zeigt einen Informationsfluss zwischen unterschiedlichen Diensten e3-1, e2-1, e2-2, e1-1, e1-2 gemäß manchen Beispielen, beispielsweise zur Ermittlung von Diensten, beispielsweise service discovery (z.B. "SD"), und/oder zur Verteilung bzw. für einen Austausch von Varianteninformationen, beispielsweise durch wenigstens einen Abonnement-Mechanismus. Pfeil a1 symbolisiert, wie der Verbunddienst e3-1 den Basisdienst e2-1 abonniert. Pfeil a2 symbolisiert, wie der Basisdienst e2-1 den atomaren Dienst e1-1 abonniert. Pfeil a3 symbolisiert, wie der Verbunddienst e3-1 den Basisdienst e2-2 abonniert. Pfeil a4 symbolisiert, wie der atomare Dienst e1-1 Varianteninformationen an den Basisdienst e2-1 sendet, z.B. signalisiert. Pfeil a5 symbolisiert, wie der Basisdienst e2-1 Varianteninformationen an den Verbunddienst e3-1 signalisiert. Pfeil a6 symbolisiert, wie der Basisdienst e2-2 den atomaren Dienst e1-2 abonniert. Pfeil a7 symbolisiert, wie der atomare Dienst e1-2 Varianteninformationen an den Basisdienst e2-2 signalisiert. Pfeil a8 symbolisiert, wie der Basisdienst e2-2 Varianteninformationen an den Verbunddienst e3-1 sendet, z.B. signalisiert. Pfeil a9 symbolisiert ein Verarbeiten der von den Basisdiensten e2-1, e2-2 erhaltenen Informationen durch den Verbunddienst e3-1, beispielsweise, um eine Funktionalität an die durch die Varianteninformationen charakterisierten Varianten VAR, z.B. von Hardwarekomponenten, anzupassen.

Bei manchen Beispielen können für Aspekte des Datenaustauschs zwischen wenigstens manchen Diensten gemäß Fig. 10 ein oder mehrere Informationselemente IE-1, IE-2, ... gemäß Fig. 6 verwendet werden, und/oder Aspekte der weiter unten beschriebenen Tabelle 1.

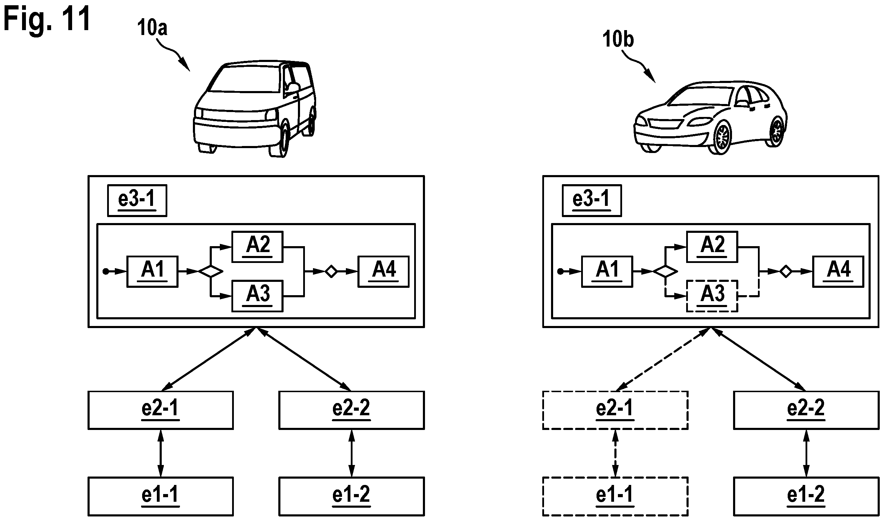

Fig. 11 zeigt schematisch Aspekte einer Verarbeitung von variantenspezifischen Informationen (z.B. "Variantenhandling") gemäß manchen Beispielen. In Fig. 11 links abgebildet ist ein erstes Fahrzeug 10a mit einer ersten Variantenkonfiguration, bei dem Informationen z.B. zwischen den diversen Diensten e1-1, e1-2, e2-1, e2-2, e3-1 ausgetauscht werden, s. die nicht bezeichneten Doppelpfeile. Mit dem Verbunddienst e3-1 assoziierte Aktionen sind in Fig. 11 links mit den Blöcken A1, A2, A3, A4 symbolisiert. Weil bei dem Fahrzeug 10a eine erste Konfiguration von z.B. Hardwarekomponenten vorhanden ist, kann der Verbunddienst e3-1 alle Aktionen A1, A2, A3, A4 ausführen. Bei dem in Fig. 11 rechts abgebildeten zweiten Fahrzeug 10b ist eine von dem Fahrzeug 10a abweichende Konfiguration gegeben, wobei beispielsweise die Dienste e2-1, e1-1 nicht verfügbar sind. Daher kann der Verbunddienst e3-1 für das zweite Fahrzeug 10b nicht alle Aktionen A1, A2, A3, A4 ausführen, sondern vorliegend z.B. nur die Aktionen A1, A2, A4, nicht jedoch Aktion A3, da dies z.B. mit der Konfiguration des zweiten Fahrzeugs 10b nicht möglich ist.

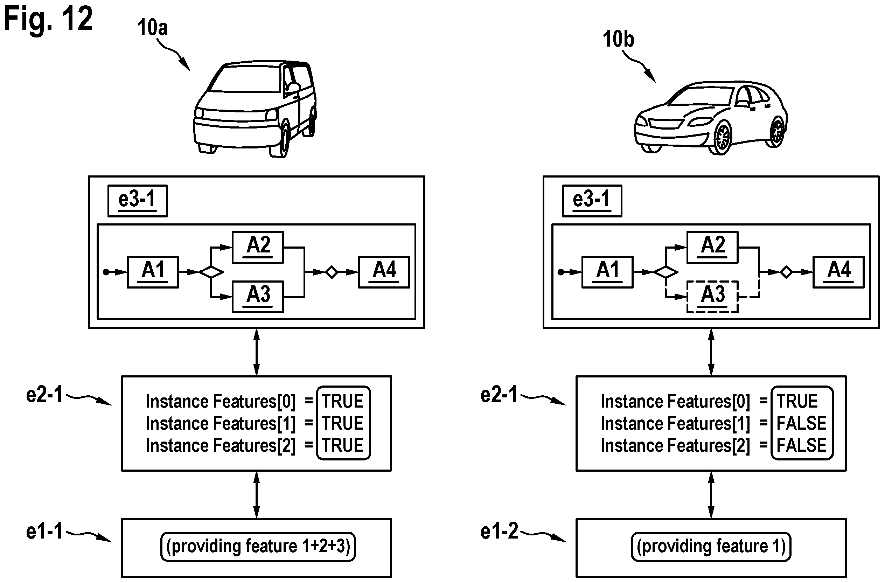

Fig. 12 zeigt weitere Aspekte eines Variantenhandlings gemäß Fig. 11 in Bezug auf Informationselemente der Dienste e1-1, e2-1, e1-2, e2-1 gemäß manchen Beispielen. Für das Fahrzeug 10b ist aus Fig. 12 zu erkennen, dass der atomare Dienst e1-2 nur das Vorhandensein des Merkmals bzw. der Funktion "feature 1" an den Basisdienst e2-1 meldet, weswegen wie bereits vorstehend unter Bezugnahme auf Fig. 11 beschrieben die Aktion A3 nicht für das Fahrzeug 10b verfügbar ist. Demgegenüber meldet der atomare Dienst e1-1 für das Fahrzeug 10a das Vorhandensein von drei Merkmalen bzw. Funktionen "feature 1+2+3" an den mit ihm assoziierten Basisdienst e2-1, so dass für das Fahrzeug 10a auch die Aktion A3 verfügbar ist.

Nachfolgend sind weitere Aspekte und Beispiele beschrieben, die - bei weiteren Beispielen - jeweils einzeln für sich oder in beliebiger Kombination miteinander mit wenigstens einem der vorstehend beschriebenen Aspekte und/oder Beispiele kombinierbar sind.

Das Prinzip gemäß der Offenbarung kann bei manchen Beispielen für eine Variantenverwaltung für eine Automobil-Softwareentwicklung verwendet werden.

Bei manchen konventionellen Ansätzen der Automobil-Softwareentwicklung ist eine Erstellung einer Reihe von Softwaremodulen vorgesehen, die verschiedene Fahrzeugkonfigurationen bedienen können, die z.B. zum Zeitpunkt der Entwicklung der Softwaremodule bekannt/geplant sind. Die Softwaremodule sind bei manchen konventionellen Ansätzen so konzipiert, dass sie Unterschiede zwischen den verschiedenen Fahrzeugvarianten erkennen und ihr Verhalten entsprechend anpassen können. Dadurch kann dieselbe Software für mehrere bekannte Fahrzeugvarianten verwendet werden, wobei nur minimale Änderungen erforderlich sind.

Eine aktuelle und zukünftige Fahrzeugentwicklung geht z.B. mit einer zunehmenden Softwarekomplexität einher, zu der z.B. eine zunehmende domänenübergreifende Interaktion von Softwarefunktionen und eine steigende Anzahl von elektronischen Funktionen in einem modernen Fahrzeug beitragen. Fix codierte Softwarevarianten für geplante Fahrzeugvarianten, wie sie vorstehend im Rahmen der genannten konventionellen Ansätze beschrieben worden sind, funktionieren zwar noch, aber aufgrund der hohen Komplexität sind der Entwicklungsaufwand und die Kosten bei manchen konventionellen Ansätzen vergleichsweise hoch, und eine Nachfrage nach einer Wiederverwendung von Softwarekomponenten z.B. auch in noch unbekannten zukünftigen Fahrzeugvarianten ohne zusätzliche Entwicklung steigt.

Bei manchen Beispielen kann das Prinzip gemäß der Offenbarung dazu verwendet werden, eine Fahrzeug-Hardware (z.B. ein oder mehrere Komponenten 10-KOMP bzw. HW-KOMP) so zu abstrahieren, dass ein Anwendungssoftware-Modul, s. z.B. das Element ANW-SW gemäß Fig. 2, mittels der Abstraktionsschicht AS auf mehreren verschiedenen Fahrzeug-HardwareVarianten 10, 10a, 10b (Fig. 11, 12) arbeiten kann, z.B., ohne dass der Code der Anwendungssoftware ANW-SW angepasst werden muss, und/oder ohne etwas über eine technische Realisierung in unteren Fahrzeugarchitekturschichten S3 (Fig. 9) zu wissen.

Mit anderen Worten ermöglicht das Prinzip gemäß der Offenbarung bei manchen Beispielen eine Entwicklung von Softwarekomponenten zur Abstraktion der Fahrzeug-Hardware, wobei beispielsweise eine Abstraktion einer bekannten und zukünftigen Varianz bezüglich der Fahrzeug-Hardware möglich ist.

Nachfolgend sind weitere Beispiele für mögliche Kategorien von Varianten gemäß der Offenbarung beschrieben. Beispielsweise können sich Varianten durch eine Verfügbarkeit von Komponenten, z.B. Hardwarekomponenten HW-KOMP, unterscheiden, s. Fig. 11, oder Varianten können z.B. eine Variation in Fähigkeiten, z.B. Funktionen, bzw. Merkmalen aufweisen, z.B. aufgrund eines höheren/niedrigeren Standards von Komponenten mit ähnlichen Aufgaben.

Mögliche Beispiele für die Verfügbarkeit von Komponenten sind: • Ein Luxusfahrzeug kann z.B. mit einem Frontradar ausgestattet sein, das eine automatische Notbremsung (AEB) ermöglicht, während ein Fahrzeug der Einstiegsklasse möglicherweise nicht mit einem solchen Frontradar ausgestattet ist. • Ein Fahrzeug der Einstiegsklasse kann z.B. über vier elektrische Fensterheber verfügen, während ein Sportfahrzeug z.B. nur zwei elektrische Fensterheber hat.

Mögliche Beispiele für unterschiedliche Fähigkeiten bzw. Funktionen sind: • Ein Luxusfahrzeug kann eine Mehrzonen-Klimaanlage haben, die unterschiedliche Temperatureinstellungen in verschiedenen Zonen des Fahrzeugs ermöglicht, während ein Mittelklassefahrzeug z.B. nur eine Temperatureinstellung für die Klimaanlage hat. • Ein Luxusfahrzeug kann z.B. über ein Kamerasystem verfügen, das Videostreams in Full-HD Qualität liefert, während ein Kamerasystem eines Mittelklassefahrzeugs Videostreams z.B. in niedrigerer SD-Qualität liefert.

Bei manchen Beispielen kann eine Variantenverwaltung unterschiedliche Informationsflussrichtungen z.B. für Sensor- und Aktorgeräte berücksichtigen, z.B. betreffend einen Signal- und/oder Steuerungsfluss, z.B. von einem Softwaremodul zu einer Hardwarekomponente HW-KOMP und umgekehrt.

Bei manchen Beispielen gemäß der Offenbarung kann eine effiziente Variantenverwaltung bereitgestellt werden, indem ein mehrschichtiger Software- und Diensteansatz verwendet wird, wie vorstehend bereits unter Bezugnahme auf Fig. 9 beschrieben. Bei manchen Beispielen ist ein Mechanismus zur Variantenverwaltung z.B. mittels der Abstraktionsschicht, z.B. Basisschicht, AS und der weiteren Schicht, beispielsweise Verbundschicht, S2, realisierbar, wodurch beispielsweise eine dienstorientierte Architektur umgesetzt werden kann.

Nachfolgend sind weitere Aspekte und Beispiele einer Variantenverwaltung auf der Basisschicht AS gemäß der Offenbarung beschrieben. Die Basisschicht AS (Fig. 9) in der dienstorientierten Architektur ist z.B. für eine Abstraktion des zugrunde liegenden Fahrzeugs 10, 10a, 10b und seiner Hardware, z.B. zu der Verbundschicht S2 hin, verantwortlich, sodass die Schnittstellen der Basisschicht AS zu der Verbundschicht S2 fahrzeug- und hardwareunabhängig sind, s. z.B. auch Block 110 gemäß Fig. 3. Bei manchen Beispielen kann die Basisschicht AS auch als API (Application Programming Interface, z.B. "Programmierschnittstellen")-Schicht bezeichnet werden.

Bei manchen Beispielen kann eine Variantenunabhängigkeit mittels der Basisschicht AS, beispielsweise mittels wenigstens eines Basisschicht-Diensts e2-1, e2-2, ... (Fig. 9) erreicht werden, indem, z.B. abgesehen von physischen Informationen und/oder einer Steuerung, die der Basisdienst e2-1, e2-2, ... bereitstellt, Informationen zur Variantenverwaltung an wenigstens einen Dienst e3-1, e3-2 der Verbundschicht S2 weitergeleitet werden, z.B. unter Verwendung von wenigstens einer der nachfolgend als Beispiel beschriebenen und in der folgenden Tabelle 1 zusammengestellten Datenstrukturen. Bei manchen Beispielen sind zur Repräsentation von Aspekten der Tabelle 1 ein oder mehrere der Informationselemente IE-1, IE-2, ... gemäß Fig. 6 verwendbar.

**Tabelle 1:**

| | | |
|---|---|---|
| Service interface type | Field | |
| Short Name | VariantlnfoAPI | |
| Long Name | Variant Information API | |
| Type | Array of structures | |
| Length | 1..n | |
| Description | An array of items, which provide information about the variance of the API service. The purpose is to inform subscribing services about the available service capabilities depending on different underlying HW variants. | |
| VariantlnfoAPI Array elements 1..n | Type | Structure |
| | Short Name | Variantltem |
| | Long Name | Variant Item |
| | Description | A structure, which provides information about a single variant item of the API service. |
| Variantltem Structure element 1 | Type | Enumeration |
| | Short Name | ID |
| | Long Name | Variant item identifier |
| | Description | Unique identifier to specify the variant item. E.g. "Window" |
| Variantltem Structure element 2 | Type | Number |
| | Short Name | FeatureCount |
| | Long Name | Count of available features |
| | Description | Different variants provide a different number of features, this is the number of all features, which are known/imagined for this variant item at this moment and for future. |
| Variantltem Structure element 3 | Type | Array of enumeration |
| | Short Name | Features[ ] |
| | Long Name | Features of a variant item |
| | Size | 1..n (The fill level of the array can be seen in the "FeatureCount" number) |
| | Description | Different variants provide different features, this is a list of all features, which are known/imagined for this variant item at this moment and for future. E.g. for a variant item "window", features could be "electrical opening", "heating", "tinting", etc. |
| Variantltem Structure element 4 | Type | Number |
| | Short Name | InstanceCount |
| | Long Name | Number of instances of a variant item |
| | Description | Numbered value which provides the number of instances of this service. (e.g. 2 windows in a sportscar) |
| Variantltem Structure element 5 | Type | Array of structures |
| | Short Name | Instances[ ] |
| | Long Name | Instance Information |
| | Size | 1..n (The fill level of the array can be seen in the "InstanceCount" number) |
| | Description | Array of structures which contain instance information and the features it supports for variant handling. |
| Instances Array element 0..n | Type | Structure |
| | Short Name | Instance |
| | Long Name | Instance Attribute |
| | Description | Structure which contains instance information and its supported features. |
| Instance Structure element1 | Type | Enumeration |
| | Short Name | ID |
| | Long Name | Instance Identifier |
| | Description | Unique identifier to specify an instance, e.g. "Front Left Window" or "All Windows" |
| Instance Structure element 2 | Type | Array of boolean |
| | Short Name | Features[ ] |
| | Long Name | Instance feature availability |
| | Size | Same size as VariantItem.Features[ ] |
| | Description | Each array item refers to the same index in VariantItem.Features[] and the boolean value specifies if the feature is available for this particular instance (e.g. the "Front Left Window" might have "electric opening", but no "heating" and no "tinting). This availability information can also be changed flexible during runtime. For example, if the electric opening of rear windows is inhibited by the driver main switch. |

Nachfolgend ist eine Übersetzung von Aspekten der Tabelle 1 ins Deutsche wiedergegeben:

| | | |
|---|---|---|
| Typ der Dienstschnittstelle | Feld | |
| Kurzname | VariantInfoAPI | |
| Langname | Variant Information API | |
| Typ | Array of structures | |
| Länge | 1..n | |
| Beschreibung | Ein Array von Elementen, die Informationen über die Varianz des API-Dienstes bereitstellen. Der Zweck besteht darin, abonnierende Dienste über die verfügbaren Dienstfunktionen in Abhängigkeit von verschiedenen zugrunde liegenden HW-Varianten zu informieren. | |
| VariantlnfoAPI Array Elemente 1..n | Typ | Structure |
| | Kurzname | Variantltem |
| | Langname | Variantenelement |
| | Beschreibung | Eine Struktur, die Informationen über ein einzelnes Variantenelement des API-Dienstes bereitstellt. |
| Variantltem Struktur Element 1 | Typ | Aufzählung |
| | Kurzname | ID |
| | Langname | Variantenelement Identifikation |
| | Beschreibung | Eindeutiger Bezeichner zur Angabe des Variantenartikels. Z.B. "Fenster". |
| Variantltem Struktur Element 2 | Typ | Anzahl |
| | Kurzname | FeatureCount |
| | Langname | Anzahl der verfügbaren Funktionen |
| | Beschreibung | Verschiedene Varianten bieten eine unterschiedliche Anzahl von Funktionen. Dies ist die Anzahl aller Funktionen, die derzeit und in Zukunft für diesen Variantenartikel bekannt/vorgestellt sind. |
| Variantltem Struktur Element 3 | Tvp | Arrav einer Aufzählung |
| | Kurzname | Features[ ] |
| | Langname | Funktionen eines Variantenelements |
| | Beschreibung | 1..n (Der Füllstand des Arrays wird durch das Element "FeatureCount" angegeben) |
| | Beschreibung | Verschiedene Varianten bieten verschiedene Funktionen. Dies ist eine Liste aller Funktionen, die derzeit und in Zukunft für dieses Variantenelement bekannt sind/vorgestellt werden. Z. B. könnten für ein Variantenelement "Fenster" Funktionen wie "elektrisches Öffnen", "Heizung", "Tönung" usw. verwendet werden. |
| Variantltem Struktur Element 4 | Typ | Anzahl |
| | Kurzname | InstanceCount |
| | Langname | Anzahl von Instanzen eines Variantenelements |
| | Beschreibung | Numerierter Wert, der die Anzahl der Instanzen dieses Dienstes angibt. (z. B. 2 Fenster in einem Sportfahrzeug) |
| Variantltem Struktur Element 5 | Typ | Array von Strukturen |
| | Kurzname | Instances[ ] |
| | Langname | Instanz Information |
| | Größe | 1..n (Der Füllstand des Arrays wird durch das Element "InstanceCount" angegeben) |
| | Beschreibung | Array von Strukturen, die Instanzinformationen und die von ihnen unterstützten Funktionen für die Variantenverwaltung enthalten. |
| Instanzen Array Element 0..n | Tvp | Struktur |
| | Kurzname | Instanz |
| | Langname | Instanz Attribut |
| | Beschreibung | Struktur, die Instanzinformationen und die von ihr unterstützten Funktionen enthält. |
| Instanz Struktur Element1 | Tvp | Aufzählung |
| | Kurzname | ID |
| | Langname | Instanz Identifikation |
| | Beschreibung | Eindeutige Identifikation zur Angabe einer Instanz, z. B. "vorderes linkes Fenster" oder "alle Fenster" |
| Instance Struktur Element 2 | Typ | Array von Boolean (Wahrheitswert) |
| | Kurzname | Features[ ] |
| | Langname | Verfügbarkeit von Instanzfuntkionen |
| | Größe | Selbe Größe wie VariantItem.Features[ ] |
| | Beschreibung | Jedes Array-Element verweist auf denselben Index in VariantItem.Features[] und der boolesche Wert gibt an, ob die Funktion für diese bestimmte Instanz verfügbar ist (z. B. könnte das "Fenster vorne links" über eine "elektrische Öffnung" verfügen, aber nicht über eine "Heizung" und keine "Tönung"). Diese Verfügbarkeitsinformationen können z.B. auch während einer Laufzeit flexibel geändert werden. Wenn beispielsweise die elektrische Öffnung der hinteren Fenster durch den Hauptschalter des Fahrers gesperrt ist. |

Bei manchen Beispielen können ein oder mehrere Informationselemente der Tabelle 1 verwendet werden zur Definition einer Dienst-Schnittstelle für Varianteninformationen, beispielsweise bezüglich der Basisschicht AS.

Nachfolgend sind Beispiele zur Verwendung wenigstens mancher Informationselemente der Tabelle 1 gemäß dem Prinzip der Offenbarung angegeben.

Ein allgemeines erstes Beispiel lautet wie folgt:
VariantinfoAPI[0].VariantItem.ID = Iteml
VariantinfoAPI[0].VariantItem.FeatureCount = 3
VariantinfoAPI[0].VariantItem.Features[0] = Feat1
VariantinfoAPI[0].VariantItem.Features[1] = Feat2
VariantinfoAPI[0].VariantItem.Features[2] = Feat3
VariantinfoAPI[0].VariantItem.InstanceCount = 2
VariantinfoAPI[0].VariantItem.Instances[0].Instance.ID = Instl
VariantinfoAPI[0].VariantItem.Instances[0].Instance.Features[0] = True
VariantinfoAPI[0].VariantItem.Instances[0].Instance.Features[1] = False
VariantinfoAPI[0].VariantItem.Instances[0].Instance.Features[2] = True
VariantinfoAPI[0].VariantItem.Instances[1].Instance.ID = Inst2
VariantinfoAPI[0].VariantItem.Instances[1].Instance.Features[0] = True
VariantinfoAPI[0].VariantItem.Instances[1].Instance.Features[1] = True
VariantinfoAPI[0].VariantItem.Instances[1].Instance.Features[2] = False
VariantinfoAPI[1].VariantItem.ID = Item2
VariantinfoAPI[1].VariantItem.FeatureCount = 1
VariantinfoAPI[1].VariantItem.Features[0] = Feat1
VariantinfoAPI[1].VariantItem.InstanceCount = 1
VariantinfoAPI[1].VariantItem.Instances[0].Instance.ID = Instl
VariantinfoAPI[1].VariantItem.Instances[0].Instance.Features[0] = True

Das vorstehend angeführte allgemeine erste Beispiel beschreibt Varianteninformationen eines Basisdienstes (z.B. Dienst e2-1 gemäß Fig. 9), der zwei Variantenelemente ("Item1" und "ltem2") bereitstellt. Das Variantenelement "ltem1" hat bis zu drei Funktionen ("Feat1", "Feat2", "Feat3") und zwei Instanzen von "ltem1" ("Inst1", "Inst2"). Das Variantenelement "lnst1" unterstützt "Feat1" und "Feat3", aber nicht "Feat2". Das Variantenelement "Inst2" unterstützt "Feat1" und "Feat2", unterstützt aber nicht "Feat3". Das Variantenelement "ltem2" hat ein Merkmal ("Feat1") und eine Instanz von "ltem2" ("lnst1). "lnst1" unterstützt "Feat1".

Ein zweites Beispiel für ein Fahrzeug mit vier Seitenfenstern, Windschutzscheibe und Heckscheibe mit elektrischen Funktionen lautet:
WindowVarInfoAPI[0].VariantItem.ID=Windows
WindowVarInfoAPI[0].VariantItem.FeatureCount=3
WindowVarInfoAPI[0].VariantItem.Features[0]=ElOpening
WindowVarInfoAPI[0].VariantItem.Features[1]=WinHeat
WindowVarInfoAPI[0].VariantItem.Features[2]=WinTinting
WindowVarInfoAPI[0].VariantItem.InstanceCount=7
WindowVarInfoAPI[0].VariantItem.Instances[0].Instance.ID=AllWin
WindowVarInfoAPI[0].VariantItem.Instances[0].Instance.Features[0]=True
WindowVarInfoAPI[0].VariantItem.Instances[0].Instance.Features[1]=True
WindowVarInfoAPI[0].VariantItem.Instances[0].Instance.Features[2]=True
WindowVarInfoAPI[0].VariantItem.Instances[1].Instance.ID=FLWin
WindowVarinfoAPI[0].VariantItem.Instances[1].Instance.Features[0]=True
WindowVarInfoAPI[0].VariantItem.Instances[1].Instance.Features[1]=False
WindowVarInfoAPI[0].VariantItem.Instances[1].Instance.Features[2]=False
WindowVarInfoAPI[0].VariantItem.Instances[2].Instance.ID=FRWin
WindowVarInfoAPI[0].VariantItem.Instances[2].Instance.Features[0]=True
WindowVarInfoAPI[0].VariantItem.Instances[2].Instance.Features[1]=False
WindowVarInfoAPI[0].VariantItem.Instances[2].Instance.Features[2]=False
WindowVarInfoAPI[0].VariantItem.Instances[3].Instance.ID=RLWin
WindowVarInfoAPI[0].VariantItem.Instances[3].Instance.Features[0]=True
WindowVarInfoAPI[0].VariantItem.Instances[3].Instance.Features[1]=False
WindowVarInfoAPI[0].VariantItem.Instances[3].Instance.Features[2]=True
WindowVarInfoAPI[0].VariantItem.Instances[4].Instance.ID=RRWin
WindowVarInfoAPI[0].VariantItem.Instances[4].Instance.Features[0]=True
WindowVarInfoAPI[0].VariantItem.Instances[4].Instance.Features[1]=False
WindowVarInfoAPI[0].VariantItem.Instances[4].Instance.Features[2]=True
WindowVarInfoAPI[0].VariantItem.Instances[5].Instance.ID=Windshield
WindowVarInfoAPI[0].VariantItem.Instances[5].Instance.Features[0]=False
WindowVarInfoAPI[0].VariantItem.Instances[5].Instance.Features[1]=True
WindowVarInfoAPI[0].VariantItem.Instances[5].Instance.Features[2]=False
WindowVarInfoAPI[0].VariantItem.Instances[6].Instance.ID=RearWin
WindowVarInfoAPI[0].VariantItem.Instances[6].Instance.Features[0]=False
WindowVarInfoAPI[0].VariantItem.Instances[6].Instance.Features[1]=True
WindowVarInfoAPI[0].VariantItem.Instances[6].Instance.Features[2]=True

Das vorstehende zweite Beispiel, das sich auf Fenster bezieht, beschreibt Varianteninformationen eines Fenster-Basisdienstes (s. z.B. Element e2-2 gemäß Fig. 9), der ein Variantenelement "Windows" bereitstellt, das Varianteninformationen z.B. für alle elektrisch gesteuerten Fenster in einem Fahrzeug bereitstellen kann. Das Variantenelement "Windows" hat z.B. bis zu drei Funktionen ("ElOpening", "WinHeat", "WinTinting") und sieben Instanzen des Elements "Window" ("AllWin", "FLWin", "FRWin", "RLWin", "RRWin", "Windshield", "RearWin"). Dazu gehören z.B. vier Seitenfenster rechts/links und vorne/hinten, die Windschutzscheibe und die Heckscheibe sowie eine Instanz, die die Steuerung aller Fensterinstanzen auf einmal ermöglicht.

Z.B. steuert die Instanz "AllWin" bei manchen Beispielen alle "Window"-Instanzen auf einmal und verfügt daher z.B. über alle Funktionen, die mindestens eine der Instanzen unterstützt. Wenn die "AllWin"-Instanz physisch gesteuert wird, steuert z.B. der Dienst (s. z.B. Element e2-1 gemäß Fig. 9) die angeforderte Funktion für alle Instanzen, die diese Funktion unterstützen, und lässt die Instanzen außer Acht, die die Funktion nicht unterstützen.

"FLWin" (das vordere linke Fenster) unterstützt z.B. die Funktion "ElOpening", aber nicht die Funktionen "WinHeat" und "WinTinting". Das bedeutet, dass das vordere linke Fenster elektrisch geöffnet/geschlossen werden kann, aber z.B. nicht beheizt und nicht getönt werden kann.

"FRWin" (das vordere rechte Fenster) unterstützt bei dem aktuellen zweiten Beispiel die Funktion "ElOpening", aber nicht die Funktionen "WinHeat" und "WinTinting". Das bedeutet, dass das vordere rechte Fenster elektrisch geöffnet/geschlossen, aber nicht beheizt und nicht getönt werden kann.

"RLWin" (das hintere linke Fenster) unterstützt die Funktion "ElOpening" und "WinTinting", aber nicht "WinHeat". Das bedeutet, dass das hintere linke Fenster elektrisch geöffnet/geschlossen und getönt werden kann, aber nicht beheizt werden kann.

"RRWin" (das hintere rechte Fenster) unterstützt die Funktionen "ElOpening" und "WinTinting", aber nicht "WinHeat". Das bedeutet, dass das hintere rechte Fenster elektrisch geöffnet/geschlossen und getönt werden kann, aber nicht beheizt werden kann.

"Windshield" (Windschutzscheibe) unterstützt die Funktion "WinHeat", aber nicht die Funktionen "ElOpening" und "WinTinting". Das bedeutet, dass die Windschutzscheibe beheizt, aber nicht elektrisch geöffnet/geschlossen und nicht getönt werden kann.

"RearWin" (Heckscheibe) unterstützt die Funktion "WinHeat" und "WinTinting", aber nicht "ElOpening". Das bedeutet, dass die Heckscheibe beheizt und getönt, aber nicht elektrisch geöffnet/geschlossen werden kann.

Die vorstehend unter Bezugnahme auf Tabelle 1 beschriebenen Beispiele können somit für eine effiziente Abstraktion von Hardwarevarianten von Komponenten eines Fahrzeugs 10, 10a, 10b verwendet werden. Bei manchen Beispielen können wenigstens manche Aspekte der Datenstrukturen gemäß Tabelle 1 mittels wenigstens eines der Informationselemente IE-1 bis IE-9 realisiert bzw. implementiert werden.

Bei manchen Beispielen kommen für eine Variantenverwaltung z.B. die zwei folgenden Ansätze in Betracht: A) feste, beispielsweise statische, Variantenverwaltungsinformationen, oder B) dynamische Variantenverwaltungsinformationen.

Bei manchen Beispielen bedeutet das Konzept der festen Variantenbehandlungsinformationen, dass zum Zeitpunkt der Bereitstellung des Basisdienstes e2-1 (Fig. 9) eine bestimmte Fahrzeugvariante und ihre Komponenten (z.B. Hardwarekomponenten HW-KOMP) bekannt sind und die Konfiguration des Feldes gemäß Tabelle 1 z.B. entsprechend jeder spezifischen Fahrzeugvariante erfolgt. Dieser Ansatz weist eine vergleichsweise geringe Flexibilität auf und kann bei manchen Beispielen vergleichsweise aufwendige Variantenverwaltungs- und Konfigurationsmechanismen, z.B. für jede Fahrzeugvariante, z.B. auf OEM (Original Equipment Manufacturer)-Seite, erfordern. Vorteilhaft ist das Laufzeitverhalten bei diesem Ansatz, da das Feld (s. Tabelle 1) z.B. bereits vor der Laufzeit eines Systems konfiguriert ist.

Bei manchen Beispielen ist vorgesehen, dass, wenn keine der Schnittstellen für ein bestimmtes Variantenelement in einem Fahrzeug verfügbar ist, der entsprechende Basisdienst auch nicht für diese Fahrzeugvariante bereitgestellt wird. Z.B. wird ein Basisdienst zur Bereitstellung einer API für Anzeigen in Fahrzeugen nicht für Fahrzeuge einer Einstiegsklasse bereitgestellt, die keine Display-Hardware haben. Dadurch kann bei manchen Beispielen eine Komplexität der Abstraktionsschicht AS reduziert werden.

Bei manchen Beispielen ermöglicht die dynamische Variantenverwaltung (Aspekt B), s.o.) eine vergleichsweise flexible Verwaltung unterschiedlicher Varianten, bei der z.B. nur derselbe nicht konfigurierte Basisdienst, z.B. für alle Fahrzeugvarianten, bereitgestellt wird, und bei der der Basisdienst dann z.B. verwandte Dienste finden kann, z.B. über einen an sich bekannten Abonnementmechanismus, z.B. SOME/IP-SD (SOME/IP-Service Discovery) oder ähnlich. Bei manchen Beispielen kann mit einem solchen Abonnement der erkannten verwandten Dienste der Basisdienst dann seine Informationen zur Variantenbehandlung aufbauen, z.B. unter Verwendung von Datenstrukturen gemäß Tabelle 1.

Falls keine der Schnittstellen für ein bestimmtes Variantenelement in einem Fahrzeug verfügbar ist, muss der entsprechende Basisdienst nicht für diese Fahrzeugvariante bereitgestellt werden, kann ggf. aber dennoch optional bereitgestellt werden.

Bei manchen Beispielen kann vorgesehen sein, z.B. wenn der Abonnementmechanismus, z.B. SD-Mechanismus, keinen zugrunde liegenden Dienst findet, dass der Basisdienst nach einer SD-Phase nicht mehr ausgeführt wird.

Bei manchen Beispielen ist eine Mischung aus beiden Lösungen, also A) feste Variantenverwaltungsinformationen, B) dynamische Variantenverwaltungsinformationen, ebenfalls möglich, z.B., um zunächst feste Informationen zur Variantenverwaltung in dem Fahrzeug 10 bereitzustellen, beispielsweise mittels Programmierung z.B. einer Speichereinrichtung 204 der Vorrichtung 200. Ergänzend können die zunächst fest vorgegebenen Variantenverwaltungsinformationen während der Laufzeit, also dynamisch, angepasst werden, z.B., falls es Abweichungen bei den verfügbaren zugrunde liegenden Diensten e1-1, e1-2, ... (Fig. 9) gibt.

Nachfolgend sind weitere Aspekte und Beispiele einer Variantenverwaltung in Bezug auf die weitere Schicht S2, also z.B. die Verbundschicht, beschrieben. Bei manchen Beispielen, Fig. 9, ist die Verbundschicht S2 in der Schichtarchitektur oberhalb der Abstraktionsschicht AS (die z.B. die Basisschicht, z.B. API-Schicht, repräsentiert) angeordnet.

Bei manchen Beispielen, Fig. 9, ist vorgesehen, dass auf der Verbundschicht S2 Softwarekomponenten e3-1, e3-2 bereits hardwareunabhängig sind und/oder flexibel mit verschiedenen zugrunde liegenden Fahrzeug-/Hardwarevarianten arbeiten können. Wie dies bei manchen Beispielen erreicht werden kann, ist nachfolgend in Form weiterer Beispiele beschrieben.

Bei manchen Beispielen, Fig. 11, ist vorgesehen, dass ein Verbunddienst e3-1 einem Endbenutzer eines Fahrzeugs 10a eine Mehrwertfunktion bietet. Ein Verbunddienst e3-1 kann also z.B. eine optionale Funktion charakterisieren, die z.B. entweder ein Erstausrüster oder ein Endbenutzer in das Fahrzeug 10a einbauen kann. Daher kann bei manchen Beispielen vorgesehen sein, dass der Verbunddienst e3-1 in mehreren, z.B. allen, Fahrzeugvarianten entlang einer Fahrzeugpalette des Erstausrüsters oder sogar über verschiedene Erstausrüster hinweg funktioniert bzw. funktionieren kann. Dies wird bei manchen Beispielen einerseits wie z.B. vorstehend unter Bezugnahme auf die Basisschicht AS (API-Schicht) beschrieben erreicht, andererseits kann bei manchen Beispielen vorgesehen sein, dass der Verbunddienst e3-1 über bestimmte Mechanismen verfügt, um eine gewünschte Variantenunabhängigkeit zu erreichen, wie im Folgenden anhand weiterer Beispiele beschrieben.

Bei manchen Beispielen kann der Verbunddienst e3-1 dazu ausgebildet sein, ein oder mehrere Basisdienste, beispielsweise API-Dienste, zu ermitteln. Beispielsweise kann während einer Entwicklung Wissen, beispielsweise in wenigstens einem Verbunddienst e3-1, über vorhandene Basisdienste e2-1, e2-2, ... implementiert werden. Beispielsweise kann wenigstens ein Verbunddienst e3-1 dazu ausgebildet sein, z.B. bei einem Start, z.B. über SOME/IP-SD oder einen ähnlichen Abonnementmechanismus, nach zugehörigen Basisdiensten e2-1, e2-2, ... zu suchen und die gefundenen Basisdienste e2-1, e2-2 zu abonnieren, s. die Pfeile a1, a3 gemäß Fig. 10.

Bei manchen Beispielen kann der Verbunddienst e3-1 dazu ausgebildet sein, Varianteninformationen mittels der abonnierten Basisdienste e2-1, e2-2 zu lesen, beispielsweise unter Verwendung von einem oder mehreren Informationselementen IE-1, IE-2, ... (Fig. 6), beispielsweise gemäß oder basierend auf Datenstrukturen der Tabelle 1.

Bei manchen Beispielen kann der Verbunddienst e3-1 dazu ausgebildet sein, seine Funktionalität, z.B. je nach erkannten bzw. abonnierten Basisdiensten e2-1, e2-2, ... anzupassen, siehe den Pfeil a9 gemäß Fig. 10. Dies bedeutet beispielsweise, dass der Verbunddienst e3-1 verschiedene Funktionalitätsgrade unterstützt bzw. realisiert, die er z.B. anderen Verbunddiensten e3-2 (Fig. 9) oder Anwendungsdiensten e4-1 basierend auf den abonnierten Basisdiensten e2-1, e2-2 und deren Funktionalitäten bereitstellen kann.

Manche Beispiele, Fig. 11, beziehen sich auf eine Verwendung 300 des Verfahrens gemäß der Offenbarung und/oder der Vorrichtung 200 gemäß der Offenbarung und/oder des Fahrzeugs 10 gemäß der Offenbarung und/oder des computerlesbaren Speichermediums SM gemäß der Offenbarung und/oder des Computerprogramms PRG gemäß der Offenbarung und/oder des Datenträgersignals DCS gemäß der Offenbarung für wenigstens eines der folgenden Elemente: a) Abstrahieren 301 von Komponenten, beispielsweise Hardwarekomponenten, des Fahrzeugs 10, beispielsweise so, dass die Anwendungssoftware ANW-SW nicht an unterschiedliche Varianten VAR der Komponenten 10-KOMP angepasst werden muss, oder b) Bereitstellen 302 einer wenigstens die Abstraktionsschicht AS, beispielsweise mehrere Schichten AS, S2, und/oder Dienste aufweisenden Architektur, oder c) Bereitstellen 303 einer Programmierschnittstelle, beispielsweise Application Programming Interface, API, beispielsweise zur Abstraktion von unterschiedlichen Varianten von Komponenten des Fahrzeugs 10, oder d) Steigern 304 einer Flexibilität bezüglich einer Verarbeitung von variantenspezifischen Informationen für das Fahrzeug 10, oder e) Vermeiden 305 einer festen Codierung von variantenspezifischen Aspekten einer Software für das Fahrzeug 10.

## Patentansprüche

1. Computerimplementiertes Verfahren zum Verarbeiten von mit einem Fahrzeug (10), beispielsweise Kraftfahrzeug, assoziierten Informationen, beispielsweise zur Verwaltung und/oder Unterstützung von unterschiedlichen Varianten (VAR) von Komponenten (10-KOMP) des Fahrzeugs (10), aufweisend: Bereitstellen (100) einer Abstraktionsschicht (AS) zwischen wenigstens einer Komponente (10-KOMP) des Fahrzeugs (10) und einer Anwendungssoftware (ANW-SW) des Fahrzeugs (10), und, optional, Verarbeiten (102) von mit der Komponente (10-KOMP) des Fahrzeugs (10) assoziierten Daten (DAT-10-KOMP) mittels der Abstraktionsschicht (AS).

2. Verfahren nach Anspruch 1, wobei die Komponente (10-KOMP) wenigstens eines der folgenden Elemente ist oder aufweist: a) eine Hardwarekomponente (HW-KOMP), oder b) eine Softwarekomponente (SW-KOMP).

3. Verfahren nach wenigstens einem der vorstehenden Ansprüche, aufweisend: Verarbeiten (102a), beispielsweise wahlweises Verarbeiten (102b), von mit unterschiedlichen Varianten (VAR) von Komponenten (10-KOMP) des Fahrzeugs (10) assoziierten Daten.

4. Verfahren nach wenigstens einem der vorstehenden Ansprüche, aufweisend: Bereitstellen (110) einer ersten Schnittstelle (SS-1), beispielsweise zu einer weiteren Schicht, beispielsweise Verbundschicht, (S2), wobei die erste Schnittstelle (SS-1) unabhängig ist von wenigstens einem der folgenden Elemente: a) Fahrzeug (10), oder b) Komponente (10-KOMP) des Fahrzeugs (10), beispielsweise Hardwarekomponente (HW), und, optional, Senden (112) von Informationen (I-10, I-10-KOMP) bezüglich des Fahrzeugs (10) und/oder der Komponente (10-KOMP) des Fahrzeugs (10), beispielsweise der Hardwarekomponente (HW-KOMP), über die erste Schnittstelle (SS-1), beispielsweise an wenigstens eines der folgenden Elemente: a) Anwendungssoftware (ANW-SW), oder b) weitere Schicht (S2).

5. Verfahren nach wenigstens einem der vorstehenden Ansprüche, aufweisend: Empfangen (120) von variantenspezifischen Informationen (I1) bezüglich der Komponente (10-KOMP) des Fahrzeugs (10), beispielsweise von einem variantenspezifischen, beispielsweise hardwarespezifischen, Dienst (e1-1), Senden (122) von mit wenigstens einer Variante (VAR) der variantenspezifischen Informationen (I1) assoziierten Information (I2), beispielsweise basierend auf den variantenspezifischen Informationen (I1), beispielsweise zur Behandlung der wenigstens einen Variante (VAR), an wenigstens eines der folgenden Elemente: a) Anwendungssoftware (ANW-SW), oder b) weitere Schicht (S2).

6. Verfahren nach wenigstens einem der vorstehenden Ansprüche, aufweisend: Verarbeiten (130), beispielsweise Verwenden (130a), wenigstens einer computerimplementierten Datenstruktur (DS), die wenigstens einen Aspekt der unterschiedlichen Varianten (VAR) der Komponenten (10-KOMP) charakterisiert.

7. Verfahren nach Anspruch 6, wobei die Datenstruktur (DS) wenigstens eines der folgenden Elemente aufweist: a) ein erstes Informationselement (IE-1), das eine Variante (VAR) charakterisiert, oder b) ein zweites Informationselement (IE-2), das eine, beispielsweise eindeutige, Identifikation, der Variante (VAR) charakterisiert, oder c) ein drittes Informationselement (IE-3), das eine Anzahl von mit der Variante (VAR) assoziierten Merkmalen charakterisiert, oder d) ein viertes Informationselement (IE-4), das eine Liste von mit der Variante (VAR) assoziierten Merkmalen charakterisiert, oder e) ein fünftes Informationselement (IE-5), das eine Anzahl von Instanzen eines mit der Datenstruktur (DS) assoziierten Objekts charakterisiert, oder f) ein sechstes Informationselement (IE-6), das Instanzen eines bzw. des mit der Datenstruktur (DS) assoziierten Objekts charakterisiert, oder g) ein siebtes Informationselement (IE-7), das Eigenschaften von Instanzen wenigstens eines mit der Datenstruktur (DS) assoziierten Objekts charakterisiert, oder h) ein achtes Informationselement (IE-8), das eine Identifikation einer Instanz charakterisiert, oder i) ein neuntes Informationselement (IE-9), das eine Verfügbarkeit eines Merkmals für eine Instanz charakterisiert.

8. Verfahren nach wenigstens einem der vorstehenden Ansprüche, aufweisend wenigstens eines der folgenden Elemente: a) Bereitstellen (140) eines Basisdiensts (D1; e2-1) zur Verarbeitung von mit der Abstraktionsschicht (AS) assoziierten Informationen, oder b) Bereitstellen eines weiteren Diensts (D2; e3-1), beispielsweise für einen Datenaustausch zwischen dem Basisdienst (D1; e2-1) und der Anwendungssoftware (ANW-SW).

9. Vorrichtung (200) zum Verarbeiten von mit einem Fahrzeug (10), beispielsweise Kraftfahrzeug, assoziierten Informationen, beispielsweise zur Verwaltung und/oder Unterstützung von unterschiedlichen Varianten (VAR) von Komponenten (10-KOMP) des Fahrzeugs (10), wobei die Vorrichtung (200) dazu ausgebildet ist, das Verfahren nach wenigstens einem der vorstehenden Ansprüche auszuführen.

10. Fahrzeug (10) aufweisend wenigstens eine Vorrichtung (200) nach Anspruch 9.

11. Computerlesbares Speichermedium (SM), umfassend Befehle (PRG), die bei der Ausführung durch einen Computer (202) diesen veranlassen, das Verfahren nach wenigstens einem der Ansprüche 1 bis 8 auszuführen.

12. Computerprogramm (PRG), umfassend Befehle, die bei der Ausführung des Programms (PRG) durch einen Computer (202) diesen veranlassen, das Verfahren nach wenigstens einem der Ansprüche 1 bis 8 auszuführen.

13. Datenträgersignal (DCS), das das Computerprogramm (PRG) nach Anspruch 12 überträgt und/oder charakterisiert.

14. Verwendung (300) des Verfahrens nach wenigstens einem der Ansprüche 1 bis 8 und/oder der Vorrichtung (200) nach Anspruch 9 und/oder des Fahrzeugs (10) nach Anspruch 10 und/oder des computerlesbaren Speichermediums (SM) nach Anspruch 11 und/oder des Computerprogramms (PRG) nach Anspruch 12 und/oder des Datenträgersignals (DCS) nach Anspruch 13 für wenigstens eines der folgenden Elemente: a) Abstrahieren (301) von Komponenten (10-KOMP), beispielsweise Hardwarekomponenten (HW-KOMP), des Fahrzeugs (10), beispielsweise so, dass die Anwendungssoftware (ANW-SW) nicht an unterschiedliche Varianten (VAR) der Komponenten (10-KOMP) angepasst werden muss, oder b) Bereitstellen (302) einer wenigstens die Abstraktionsschicht (AS), beispielsweise mehrere Schichten, und/oder Dienste aufweisenden Architektur, oder c) Bereitstellen (303) einer Programmierschnittstelle, beispielsweise Application Programming Interface, API, beispielsweise zur Abstraktion von unterschiedlichen Varianten (VAR) von Komponenten (10-KOMP) des Fahrzeugs (10), oder d) Steigern (304) einer Flexibilität bezüglich einer Verarbeitung von variantenspezifischen Informationen für das Fahrzeug (10), oder e) Vermeiden (305) einer festen Codierung von variantenspezifischen Aspekten einer Software für das Fahrzeug (10).
